# EUROPEAN PATENT APPLICATION

(11) **EP 0 819 379 A1**
(43) Date of publication of application: **21.01.1998**
(21) Application number: 97305385.3
(22) Date of filing: 18.07.1997
(51) Int. Cl.: A01K 89/00

(54) **Reel mounting structure**

(30) Priority: 18.07.1996 JP 189723/96
(71) Applicant: SEIKO INSTRUMENTS INC., Chiba-shi, Chiba 261 (JP)
(72) Inventor: Yokosuka, Kouichi, Mihama-ku, Chiba-shi, Chiba (JP)
(74) Representative: Sturt, Clifford Mark

(57) **Abstract**

A reel mounting structure for a fishing rod is provided. A weight balance between the fishing rod and the reel may be adjusted for providing convenience to fishermen. A mounting plate 1, a fixture member 2 and a mounting post 3 are divided in an overlap structure so that the mounting plate 1 of a mounting portion on the reel side for mounting the reel onto the fishing rod may be moved relative to the reel body in an axial direction. As a result, the weight balance between the fishing rod and the reel that largely affect the fishing technique for the fisherman may be adjusted.

## Description

The present invention relates to a fishing rod, and more particularly to a reel mounting structure for a fishing rod. A weight balance between the fishing rod and the reel may be adjusted for providing convenience to users.

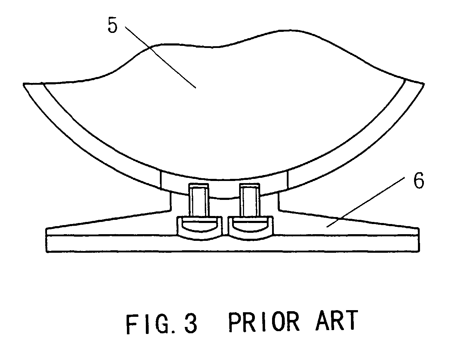

As shown in Fig. 3, in general, the conventional mounting portion is that a mounting portion 6 is attached directly by screws 4 to a frame 5 mounted on a reel body (not shown). Then, the conventional mounting portion cannot move in the axial direction of the fishing rod relative to the reel body as desired.

This invention provides a fishing reel characterised in that a mounting plate of a mounting portion on a reel slide for mounting the reel on a fishing rod may be moved in an axial direction of the fishing rod relative to a body of the fishing reel as desired.

The fishing technique of the fisherman is largely affected by the weight balance between the fishing rod and the reel. A mounting plate of a mounting portion may be moved in the axial direction of the fishing rod as desired so that the reel centre of gravity may be relatively moved by the amount of movement of the mounting plate to thereby adjust the weight balance.

A structure is divided into an overlap structure so that a mounting plate of the mounting portion on the reel side for mounting the reel onto the fishing rod may be slid, and the mounting plate is fastened by screws after it has been moved as desired.

According to the present invention, the centre of gravity centre of the reel body is relatively moved by the slide amount relative to the mounting portion divided in the overlap structure for the slide movement. The relative relationship of the centre of gravity of the reel to the fishing rod may be adjusted by the amount of movement of the mounting portion in the condition that the reel is mounted on the same fishing rod, so that the weight balance between the fishing rod and the reel may be adjusted.

Embodiments of the invention will now be described, by way of example only, with reference to the accompanying diagrammatic figures, in which:
Figs. 1(a) to 1(c) are schematic views showing an assembled condition according to the present invention, Fig. 1(a) is a bottom view, Fig 1(b) in a cross-sectional view taken along the line B-B of Fig. 1(a), and Fig. 1(c) is a cross-sectional view taken along the line A-A of Fig. 1(a);
Figs. 2(a), 2(b) and 2(c) are cross-sectional views showing the assembly in the respective operational conditions according to the present invention; and
Fig. 3 is a cross-sectional view showing the conventional assembled condition.

The present invention will now be described with reference to the accompanying drawings.

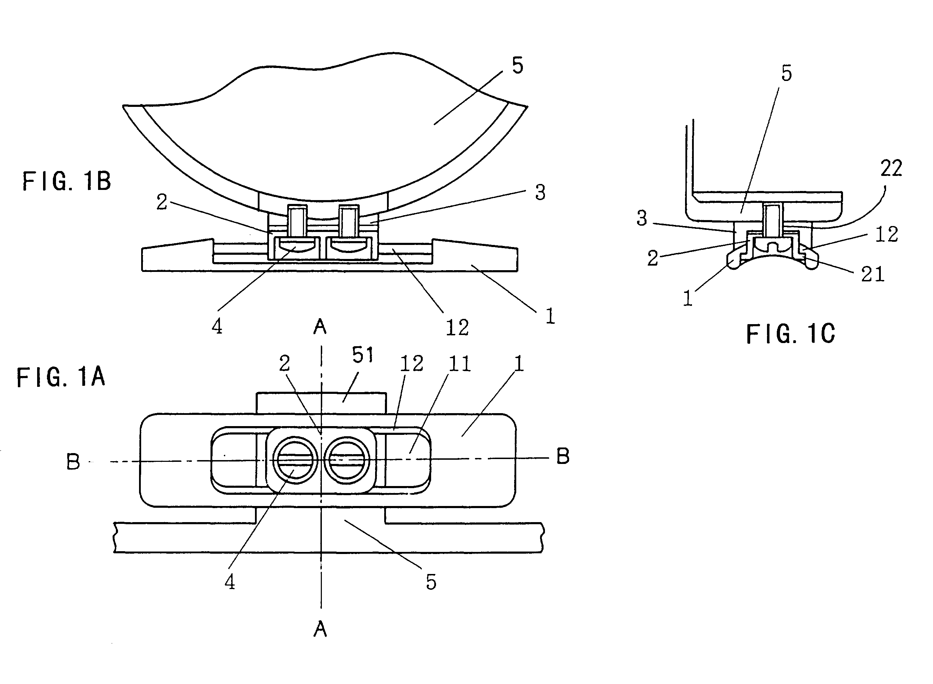

In Figs. 1(a) to 1(c), a mounting portion on the reel side to which the reel is attached (hereinafter referred to as a mounting portion) is divided into a mounting plate 1, a fixture member 2 and a mounting post 3 in an overlap structure so that the mounting portion may be slid in the axial direction of the fishing rod.

The mounting plate 1 is mounted directly on a reel mounting portion of the fishing rod (not shown) and the right and left direction of Figs. 1(a) and 1(b) are in parallel with an axis of the fishing rod. A slide hole 11 which is substantially rectangular with long sides in the longitudinal direction is formed in the mounting plate 1. Slide flanges 12 which are stepped portions are provided in the longitudinal sides of the slide hole 11. The fixture member 2, which is substantially rectangular, is engaged slidably in the longitudinal direction with the slide flanges 12 of the slide hole 11.

In the same way as in the slide hole 11, fixture flanges 21 that engage with the slide flanges 12 of the slide hole 11 are provided along the long sides of the fixture member 2. A plurality of fixture screw holes 22 for insertion of the fixture screws 4 are formed in the fixture member 2. A frame plate 51 for supporting the mounting plate 1 is provided in a frame 2 for supporting the reel (not shown). Female screws engaged with the fixture screws 4 are provided in the frame 5.

The mounting post 3 is inserted between the frame plate 51 and the mounting plate 1. A surface of the mounting portion 3 contacting with the frame plate 51 corresponds to the surface configuration of the frame 5. Holes through which the fixture screws 4 are inserted are formed in the mounting post 3.

More specifically, the slide flanges 12 which serve as rails for the slide movement and engage with gaps between the fixture member 21 and the mounting post 3 and the slide hole 11 for enabling the slide movement without any interference with the fixture member 2 during the slide movement are formed in the fixture member 2.

As shown in Figs. 1(a) to 1(c), the members of the mounting portion which is divided in the overlap structure of the mounting post 3, the mounting plate 1 and the fixture member 2 are overlapped in order and fastened to the frame 5 by fixture screws 4 to thereby form the mounting portion.

In the thus formed mounting portion, the slide flanges 12 are clamped between the mounting portion 3 and the fixture member flanges 21 by the fixture screws 4 to thereby fasten the mounting plate 1. If the fixture screws 4 are loosened, the clamping of the slide flanges 12 between the mounting post 3 and the fixture member flanges 21 is released so that the mounting plate 1 can slide along the rails of the slide flanges 12 through a space in which there is no interference between the slide hole 11 and the fixture member 2.

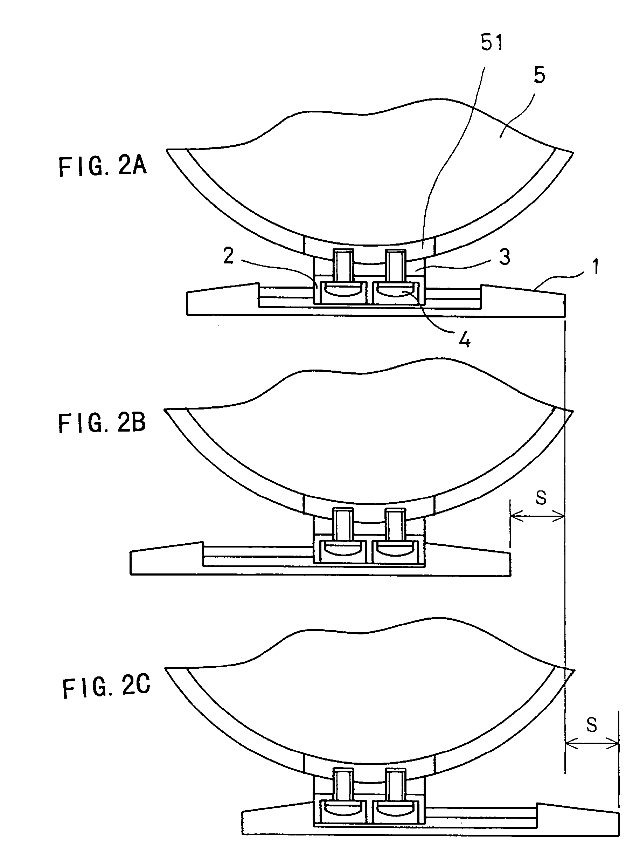

As shown in Figs. 2(a) to 2(c), in the case where the fixture member 2 is located at the centre of the slide hole 11, assuming that the space in either side of the fixture member 2 be represented by S, the mounting plate 1 is slid by S in either direction to thereby obtain the slide amount of 2S at maximum.

After the mounting plate 1 has been slid by a predetermined amount, if the mounting plate 1 is fixed by the fixture screws 4, the frame 5 has been slid by the predetermined amount.

According to this invention, in the case where the reel is mounted on the same fishing rod, since the reel may be mounted at a position of the reel body in the range of 2S at maximum; that is, the position of the centre of gravity of the reel body may be selectively determined, it is possible to realise a reel in which the weight balance between the fishing rod and the reel that largely affect the fishing technique for the fishermen may be selectively determined.

According to this invention, the weight balance between the fishing rod and the reel that largely affects the fishing technique for the fishermen may be adjusted so that the convenience of the fishing tools may be expanded. Various details of the invention may be changed without departing from its spirit nor its scope. Furthermore, the aforegoing description of the embodiments according to the present invention is provided for the purpose of illustration only, and not for the purpose of limiting the invention as defined by the appended claims and their equivalents.

The aforegoing description has been given by way of example only and it will be appreciated by a person skilled in the art that modifications can be made without departing from the scope of the present invention.

## Claims

1. A fishing reel characterised in that a mounting plate (1) of a mounting portion on a reel slide for mounting the reel on a fishing rod may be moved in an axial direction of the fishing rod relative to a body of the fishing reel as desired.
